## Europäisches Patentamt
## European Patent Office
## Office européen des brevets

(19)

(11) Veröffentlichungsnummer: **0 293 710 B1**

(12) **EUROPÄISCHE PATENTSCHRIFT**

(45) Veröffentlichungstag der Patentschrift: 25.09.91

(51) Int. Cl.⁵: **C01B  17/90**

(21) Anmeldenummer: **88108227.5**

(22) Anmeldetag: **24.05.88**

(54) **Verfahren zum Eindampfen von Schwefelsäure.**

(30) Priorität: **04.06.87 DE 3718675**

(43) Veröffentlichungstag der Anmeldung:
**07.12.88 Patentblatt  88/49**

(45) Bekanntmachung des Hinweises auf die
Patenterteilung:
**25.09.91 Patentblatt  91/39**

(84) Benannte Vertragsstaaten:
**BE DE FR GB IT NL**

(56) Entgegenhaltungen:
**EP-A- 0 022 181**
**EP-A- 0 133 505**
**DE-A- 3 329 842**
**DE-B- 1 173 074**

(73) Patentinhaber: **BAYER AG**

**W-5090 Leverkusen 1 Bayerwerk(DE)**

(72) Erfinder: **Gerken, Rudolf, Dr.**
**Ratherstrasse 79**
**W-4150 Krefeld(DE)**
Erfinder: **Lailach, Günter, Dr.**
**Bismarckstrasse 109**
**W-4150 Krefeld(DE)**
Erfinder: **Brändle, Karl Dr.**
**Waldstrasse 15**
**W-5060 Bergisch-Gladbach 2(DE)**

Rank Xerox (UK) Business Services

**Beschreibung**

Die vorliegende Erfindung betrifft ein Verfahren zum Eindampfen von Metallsulfate enthaltender 60 bis 75 %iger Schwefelsäure.

Die DE-B 1 173 074 beschreibt ein Verfahren zur Aufarbeitung von Metallsulfate enthaltender Schwefelsäure, sogenannter Dünnsäure, durch Eindampfen in Tauchbrenner-Eindampfern, Abtrennen der festen Metallsulfate von der 60 bis 70 %igen Schwefelsäure und weiteres Eindampfen dieser Schwefelsäure in gußeisernen Kesseln mit Dephlegmator bei 300 bis 330 °C auf einen $H_2SO_4$-Gehalt von 93,5 bis 95 %. Diese hochkonzentrierte Schwefelsäure wird nach Abtrennung der Metallsulfate beim Titanrohstoffaufschluß eingesetzt. Nachteilig an diesem Verfahren sind neben den sehr hohen spezifischen Anlagekosten ein hoher Energieverbrauch sowie ein großer Reparaturaufwand.

Gemäß der EP-A 133 505 wird Dünnsäure in mehreren Stufen unter Vakuum soweit eingedampft, daß eine Suspension von Metallsulfaten in 62 bis 70 %iger Schwefelsäure entsteht. Diese Säure wird entweder direkt oder nach weiterem Eindampfen auf einen $H_2SO_4$-Gehalt von 75-85 % beim Titanrohstoffaufschluß eingesetzt. Nachteilig an diesem Verfahren ist, daß Oleum benötigt wird, um durch Mischen mit der zurückgewonnenen Säure die für die Aufschlußreaktion erforderliche Konzentration zu erreichen.

Aufgabe der vorliegenden Erfindung ist es, ein Verfahren bereitzustellen, welches die Nachteile der beschriebenen Verfahren nicht aufweist.

Diese Aufgabe wird erfindungsgemäß dadurch gelöst, daß die Dünnsäure soweit eingedampft wird, daß nach dem Kristallisieren und Abtrennen der festen Metallsulfate eine 60 bis 75 %ige Schwefelsäure resultiert, die noch gelöste Metallsulfate enthält. Erfindungsgemäß muß die einzudampfende Schwefelsäure jedoch so gut wie frei von Eisen-(III)-Ionen sein. Diese Schwefelsäure wird dann unter Vakuum bei 150 bis 220 °C auf eine Konzentration von 85 bis 96 % $H_2SO_4$ (bezogen auf salzfreie Säure) eingedampft. Gegenstand der vorliegenden Erfindung ist somit ein Verfahren zum Eindampfen von gelöste Metallsulfate enthaltender 60 bis 75 %iger Schwefelsäure, die durch Eindampfen von metallsulfathaltigen Dünnsäuren und Abtrennen der kristallisierten Metallsulfate erhalten wurde, welches dadurch gekennzeichnet ist, daß der Eisen(III)-Ionen-Gehalt der einzudampfenden 60 - 75 %igen Schwefelsäure durch Reduktion der Eisen(III)- zu Eisen(II)-Ionen unter 0,01 Gew.-%, vorzugsweise unter 0,005 Gew.-% gesenkt wird, daß diese Eisen(III)-Ionen-arme Schwefelsäure unter Vakuum bei Temperaturen von 150 bis 220 °C auf eine Konzentration von 85 bis 96 % $H_2SO_4$ eingedampft wird und daß gegebenenfalls die bei der Aufkonzentrierung der Säure auf 85 bis 96 % auskristallisierenden Metallsulfate abgetrennt werden.

Die so gewonnene Schwefelsäure kann allein oder zusammen mit konzentrierter salzfreier Schwefelsäure beim Rohstoffaufschluß eingesetzt werden.

In einer bevorzugten Ausführungsform des erfindungsgemäßen Verfahrens wird die Eindampfung der Metallsulfate enthaltenden Schwefelsäure in Horizontalverdampfern oder Zwangsumlaufverdampfern mit Tantalwärmeaustauschern durchgeführt. Es ist ebenso vorteilhaft, die erfindungsgemäße Verdampfung in Zwangsumlaufverdampfern mit emaillierten Wärmeübertragungsflächen durchzuführen. Ein solches Verdampfersystem wird in der EP-B 22 181 beschrieben.

Es hat in der Vergangenheit nicht an Versuchen gefehlt, metallsulfathaltige Schwefelsäuren auf höhere Konzentrationen aufzukonzentrieren. Dabei traten in der Regel jedoch häufig Verkrustungen an den Wärmeaustauscherflächen auf, durch die die Verdampfungsleistung beeinträchtigt oder das Unterbrechen des Prozesses und Reinigen der Wärmeaustauscher erzwungen wurden. Überrachenderweise wurde nun gefunden, daß diese Ablagerungen von Metallsulfaten auf den Wärmeübertragungsflächen beim erfindungsgemäßen Verfahren nicht auftauchen. Mitverantwortlich dafür ist ein geringer Gehalt an Eisen(III)-ionen in der aufzukonzentrierenden Schwefelsäure. Die Forderung nach einem niedrigen Eisen(III)-Gehalt wird insbesondere dann essentiell, wenn die metallsulfathaltige Schwefelsäure auf Konzentrationen über 92 % $H_2SO_4$ eingedampft wird. Hierfür sollte der Eisen(III)-Gehalt der 60 bis 75 %igen Schwefelsäure unter 50 ppm liegen.

Bevorzugt werden zu diesem Zweck der einzudampfenden Schwefelsäure Reduktionsmittel zugegeben. Dies geschieht in einer besonders vorteilhaften Ausführungsform des erfindungsgemäßen Verfahrens durch Zugabe von Natrium-Formaldehydsulfoxylat als Reduktionsmittel. Es ist aber auch möglich, den geforderten Eisen(III)-Ionengehalt durch Zugabe von metallischem Eisen oder durch elektrochemische Reduktion zu erreichen.

Je nach Titanrohstoff kann der Chrom- und Vanadium-Ionen-Gehalt der 62 bis 70 %igen zurückgewonnenen Schwefelsäure sich störend beim Prozeß der Pigmentherstellung auswirken. Nach dem Eindampfen dieser Säure auf eine Konzentration von 75-85 % $H_2SO_4$ fallen die Metallsulfate in feinteiliger, äußerst schwer filtrierbarer Form aus, so daß eine Verbesserung der Säurequalität kaum möglich ist. Überraschend wurde aber gefunden, daß nach der erfindungsgemäßen Eindampfung der zurückgewonnenen Schwefelsäure auf eine Konzentration von 85-96 % $H_2SO_4$ die Metallsulfate in besser filtrierbarer Form kristallisieren. Ein weiteres Ziel des erfindungsgemäßen Verfahrens ist deshalb eine Verbesserung der Qualität der zurückgewonnenen Schwefelsäure durch Abtrennung der beim Abkühlen unter 100° C kristallisierten Metallsulfate, insbesondere der Schwermetallsulfate. Die Abtrennung der Metallsufate kann auf bekannte Weise durch Filtration oder Zentrifugieren erfolgen.

Der Chromgehalt der von den festen Metallsulfaten und -hydrogensulfaten abgetrennten 85-96 %igen Schwefelsäure ist deutlich geringer als derjenige der 60-75 %igen Schwefelsäure, so daß auch bei hohem Anteil der zurückgewonnenen Säure an der zum Rohstoffaufschluß benötigten Säure keine Beeinflussung der Pigmentqualität durch die zurückgewonnene Schwefelsäure zu befürchten ist.

Im folgenden wird die Erfindung beispielhaft erläutert, ohne daß darin eine Einschränkung des erfindungsgemäßen Verfahrens gesehen werden soll.

Vergleichsbeispiel:

Aus Dünnsäure durch Eindampfen und Abtrennen der festen Metallsulfate zurückgewonnene Schwefelsäure hatte folgende Zusammensetzung (in Gew.-%):
64,2 % $H_2SO_4$; 0,08 % $Fe^{2+}$; 0,06 % $Fe^{3+}$, 0,3 % $Al^{3+}$, 0,4 % $Mg^{2+}$; 0,02 % $Cr^{3+}$; 0,004 % $V^{3+}$.

Diese Säure wurde in einem Horizontalverdampfer (emaillierter Stahlbehälter mit Tantalrohrbündelwärmeaustauscher) bei 40 mbar und einer Säureaustrittstemperatur von 185° C auf eine Konzentration von 92,6 % $H_2SO_4$ (bezogen auf salzfreie Schwefelsäure) eingedampft. Im Laufe einer Woche fiel die Schwefelsäurekonzentration bei sonst unveränderten Betriebsbedingungen auf 90,3 %. Nach dem Entleeren und Reinigen des Verdampfers wurde die Konzentration von 92,6 % wieder erreicht.

Beispiel 1

Schwefelsäure mit einer Zusammensetzung wie im Vergleichsbeispiel wurde mit 2 g Natrium-Formaldehydsulfoxylat pro Liter versetzt, bevor sie in den Horizontalverdampfer eingespeist wurde. Der $Fe^{3+}$-Gehalt der eingespeisten Säure lag bei 0,004 %. Während 2 Wochen Betriebsdauer wurde keine Verminderung der Eindampfleistung beobachtet.

Beispiel 2

Vorkonzentrierte Schwefelsäure (aus Dünnsäure zurückgewonnen) wurde in einem Zwangsumlaufverdampfer aus emailliertem Stahl mit emaillierten Doppelwandrohren, in denen die Verdampfungswärme mittels Wärmeträgeröl zugeführt wurde, bei 220° C und 60 mbar Absolutdruck weiter eingedampft. Die aus dem Verdampfer ausfließende konzentrierte Schwefelsäure wurde auf eine Temperatur von 62° C abgekühlt und mit einem Druckfilter filtriert. Die Qualität der gemäß EP-A 133 505 zurückgewonnenen Schwefelsäure und der erfindungsgemäß weiter konzentrierten und filtrierten Schwefelsäure sind in der Tab. gegenüber gestellt.

| Zusammensetzung der Schwefelsäure (Gew.-%) | | |
|---|---|---|
| | vorkonzentrierte Säure | konzentrierte Säure |
| $H_2SO_4$ | 65,3 | 94,7 |
| $FeSO_4$ | 0,11 | 0,04 |
| $Fe_2(SO_4)_3$ | 0,015 | 0,01 |
| $MgSO_4$ | 2,0 | 0,19 |
| $Al_2(SO_4)_3$ | 1,5 | 0,14 |
| $TiOSO_4$ | 0,03 | 0,005 |
| $MnSO_4$ | 0,037 | 0,002 |
| $VOSO_4$ | 0,003 | 0,002 |
| $Cr_2(SO_4)_3$ | 0,047 | 0,008 |

**Patentansprüche**

1. Verfahren zum Eindampfen von gelöste Metallsulfate enthaltender 60 bis 75 %iger Schwefelsäure, die durch Eindampfen von metallsulfathaltigen Dünnsäuren und Abtrennen der kristallisierten Metallsulfate erhalten wurde, dadurch gekennzeichnet, daß der Eisen(III)-Ionen-Gehalt der einzudampfenden 60 bis 75 %igen Schwefelsäure durch Reduktion der Eisen(III)-zu Eisen(II)-Ionen unter 0,01 Gew.-%, vorzugsweise unter 0,005 Gew.-% gesenkt wird, daß diese Eisen(III)-Ionen-arme Schwefelsäure unter Vakuum bei Temperaturen von 150 - 220° C auf eine Konzentration von 85 - 96 % $H_2SO_4$ eingedampft wird und daß gegebenenfalls die bei der Aufkonzentrierung der Säure auf 85 bis 96 % auskristallisierenden Metallsulfate abgetrennt werden.

2. Verfahren gemäß Anspruch 1, dadurch gekennzeichnet, daß die Eindampfung in Horizontalverdampfern oder Zwangsumlaufverdampfern mit Tantalwärmeaustauschern durchgeführt wird.

3. Verfahren gemäß Anspruch 1, dadurch gekennzeichnet, daß die Eindampfung in Zwangsumlaufverdampfern mit emaillierten Wärmeübertragungsflächen durchgeführt wird.

4. Verfahren gemäß einem der Ansprüche 1 bis 3, dadurch gekennzeichnet, daß der einzudampfenden Schwefelsäure vor der Eindampfung Reduktionsmittel zugegeben werden.

5. Verfahren gemäß Anspruch 4, dadurch gekennzeichnet, daß das Reduktionsmittel Natrium-Formaldehydsulfoxylat ist.

6. Verfahren gemäß Anspruch 4, dadurch gekennzeichnet, daß die Reduktion der Eisen(III)-Ionen elektrochemisch durchgeführt wird.

7. Verfahren nach Anspruch 1, dadurch gekennzeichnet, daß die Qualität der zurückgewonnenen Schwefelsäure durch Abtrennen der festen Metallsulfate bei Temperaturen unter 100° C verbessert wird.

**Claims**

1. A process for the concentration by evaporation of 60 to 75% sulfuric acid containing dissolved metal sulfates obtained by concentration by evaporation of thin acids containing metal sulfates and separation of the crystallised metal sulfates, characterized in that the iron(III) ion content of the 60 to 75% sulfuric acid to be concentrated by evaporation is reduced to below 0.01% by weight and preferably to below 0.005% by weight by reduction of the iron(III) ions to iron(II) ions, in that the sulfuric acid low in iron(III) ions is concentrated by evaporation in vacuo at temperatures of 150 to 220° C to a concentration of 85 to 96% $H_2SO_4$ and in that the metal sulfates crystallizing out during concentration by evaporation of the acid to 85-96% are optionally separated off.

2. A process as claimed in claim 1, characterized in that the concentration by evaporation is carried out in horizontal evaporators or forced-circulation evaporators with tantalum heat exchangers.

3. A process as claimed in claim 1, characterized in that the concentration by evaporation is carried out in forced-circulation evaporators with enamelled heat transfer surfaces.

4. A process as claimed in any of claims 1 to 3, characterized in that reducing agents are added to the sulfuric acid to be concentrated by evaporation before the concentration by evaporation.

5. A process as claimed in claim 4, characterized in that the reducing agent is sodium formaldehyde sulfoxylate.

6. A process as claimed in claim 4, characterized in that the iron(III) ions are electrochemically reduced.

7. A process as claimed in claim 1, characterized in that the quality of the sulfuric acid recovered is improved by separation of the solid metal sulfates at temperatures below 100° C.

**Revendications**

1. Procédé pour concentrer par évaporation de l'acide sulfurique à 60 à 75% contenant des sulfates métalliques qui a été obtenu par concentration d'acide dilué contenant des sulfates métalliques et

4

séparation des sulfates métalliques cristallisés, caractérisé en ce que la teneur en ions de fer (III) de l'acide sulfurique à 60 à 75% à concentrer est abaissée par réduction des ions de fer (III) en ions de fer (II) en dessous de 0,01% en poids et, de préférence, en dessous de 0,005% en poids, en ce que cet acide sulfurique à faible teneur en ions de fer (III) est concentré par évaporation sous vide à des températures de 150 - 220 °C jusqu'à une concentration à 85-96% de $H_2SO_4$ et en ce que les sulfates métalliques cristallisant au cours de la concentration de l'acide à 85 à 96% sont éliminés le cas échéant.

2. Procédé selon la revendication 1, caractérisé en ce que la concentration est effectuée dans des évaporateurs horizontaux ou des évaporateurs à circulation forcée, avec échangeurs de chaleur en tantale.

3. Procédé selon la revendication 1, caractérisé en ce que la concentration est effectuée dans des évaporateurs à circulation forcée avec surfaces d'échange thermique émaillées.

4. Procédé selon l'une des revendications 1 à 3, caractérisé en ce que, avant cette concentration, un agent réducteur est ajouté à l'acide sulfurique à concentrer.

5. Procédé selon la revendication 4, caractérisé en ce que l'agent réducteur est du formaldéhydesulfoxylate de sodium.

6. Procédé selon la revendication 4, caractérisé en ce que la réduction des ions de fer (III) est effectuée par voie électrochimique.

7. Procédé selon la revendication 1, caractérisé en ce que la qualité de l'acide sulfurique récupéré est améliorée par séparation des sulfates métalliques solides à des températures inférieures à 100 °C.